(19) Europäisches Patentamt
European Patent Office
Office européen des brevets

(11) **EP 3 264 058 A1**

(12) **EUROPEAN PATENT APPLICATION**
published in accordance with Art. 153(4) EPC

(43) Date of publication:
**03.01.2018 Bulletin 2018/01**

(51) Int Cl.:
*G01K 1/14* (2006.01)     *B23K 20/12* (2006.01)
*B23Q 17/09* (2006.01)

(21) Application number: **16755663.8**

(22) Date of filing: **25.02.2016**

(86) International application number:
**PCT/JP2016/055730**

(87) International publication number:
**WO 2016/136919 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.02.2015 JP 2015035073**

(71) Applicant: **Yamamoto Metal Technos Co., Ltd.**
**Osaka-shi, Osaka 547-0034 (JP)**

(72) Inventors:
• **YAMAMOTO,Kengo**
**Osaka 5470034 (JP)**

• **YAMAMOTO,Taizoh**
**Osaka 5470034 (JP)**
• **SHINDO,Masatoshi**
**Osaka 5470034 (JP)**
• **ARAKI,Masafumi**
**Osaka 5470034 (JP)**
• **ENOMOTO,Masatoshi**
**Osaka 5470034 (JP)**

(74) Representative: **Franke, Dirk**
**Franke & Partner**
**Patent- und Rechtsanwälte**
**Widenmayerstraße 25**
**80538 München (DE)**

(54) **TEMPERATURE MEASUREMENT DEVICE**

(57)     [Problem] To provide a temperature measurement device for a rotating member of a processing device that grips a rotating member made from a metal and capable of rotating around a rotational axis, and moves in coordination with and coaxially rotates with the rotating member. [Solution] This temperature measurement device is equipped with: an ideal temperature setting means for setting an ideal temperature while the rotating member is rotating; a temperature measurement means for measuring an actual temperature while the rotating member is rotating; and a detection means for detecting whether or not the difference between the actual temperature measured by the temperature measurement means and the ideal temperature set by the ideal temperature setting means exceeds a pre-set threshold at the time the actual temperature is measured.

Fig. 3

EP 3 264 058 A1

Description

## TECHNICAL FIELD

The present invention relates to a temperature measurement device that is capable of detecting the limit of frictional wear of a rotary member, such as a metal tool, in real time during the rotation of the rotary member to prevent damage to the tool or excessive wear of the tool.

## BACKGROUND ART

In general, there is an apparatus that turns a rotary member, including a metal tool, such as an end mill, a tap, or a drill, to machine a workpiece (an object to be machined) that is fixed. On the other hand, there is a machining apparatus, such as a cutting tool for lathe, in which the tool is fixed and a workpiece is turned. The tools used in these metal machining apparatuses have sufficient strength to perform normal machining. When the tool is used for a long time or used continuously, however, frictional wear occurs. When the frictional wear exceeds a predetermined threshold value (a wear limit), the tool may be greatly worn, and according to the circumstances, the tool may be rapidly damaged thereafter. In this case, it is necessary to replace the tool. Particularly, in the case in which machining is performed continuously night and day, it may be difficult to take measures in a timely manner. In the case in which the machine is stopped for a long time in order to replace the tool, the machining time increases. In addition, the workpiece (the object to be machined) may be secondarily damaged by the broken or ruptured tool.

Therefore, there is a great need for a method of detecting the rupture or durability limit of a rotary member, such as a tool, during the operation (rotation) thereof. In response thereto, conventionally, the operation of a machining apparatus or the time interval at which to replace the tool is adjusted according to a rule of thumb pertaining to the tool or the workpiece. Specifically, in the conventional art, an expert determines or manages a sign based on the sound generated from the tip of the tool, the vibration of the tool, or the color of the tool when the tip of the tool becomes locally red-hot due to frictional heat. In the case in which tools made of the same material and having the same diameter are used under the same conditions (the same object to be machined, the same machining speed, and the same machining method), the tool is replaced based on experience pertaining to a time by which damage will have occurred. Consequently, the tool is replaced before the tool is damaged, whereby damage to the tool is prevented (details will be described below).

In the rule of thumb, however, it is not possible to appropriately prepare for damage to the tool or the rupture of the tool in advance. In addition, there is no method of detecting in real time the load or vibration applied to the tool in an on-machine state during the operation thereof. In that sense, it is not possible to prevent damage to the tool or excessive frictional wear of the tool in real time.

Meanwhile, in addition to the tool, a rotary tool of a friction stir joining apparatus, which has been applied to practical use in industrial fields in recent years, is also a rotary member subjected to excessive frictional wear, and it is also important to determine how the deterioration in mechanical performance of the rotary tool and the time to replace the rotary tool are decided.

## RELATED ART DOCUMENT

## PATENT DOCUMENT

Patent Document 1: Japanese Patent Application Publication No. 2012-92205

## DISCLOSURE OF THE INVENTION

## PROBLEM TO BE SOLVED BY THE INVENTION

Therefore, the present invention has been made in view of the above problems, and it is an object of the present invention to provide a temperature measurement device that is capable of foreseeing (detecting) the limit of frictional wear related to the rupture or the like of a rotary member, such as a metal tool, in real time during the rotation of the rotary member while monitoring an increase in the temperature of the rotary member during the rotation thereof, thereby preventing damage to the tool or excessive wear of the tool, preventing the loss of replacement time, and preventing secondary damage to a workpiece.

## MEANING FOR SOLVING THE PROBLEM

A first embodiment of the present invention provides a temperature measurement device for measuring the temperature of a rotary member in a machining apparatus that holds the rotary member, which is rotatable about an axis of rotation and rotates coaxially with the rotary member in cooperation with the rotary member, the temperature measurement device including
an ideal temperature setting means for setting an ideal temperature of the rotary member during the rotation of the rotary member,
a temperature measurement means for measuring an actual temperature of the rotary member during the rotation of the rotary member, and
a detection means for detecting whether or not the difference between the actual temperature measured by the temperature measurement means and the ideal temperature set by the ideal temperature setting means exceeds a predetermined threshold value.

In the first embodiment of the present invention, it is possible to detect a sign of rupture or the like in the case in which the difference between the ideal temperature and the actually measured temperature of the rotary member, such as the tool, exceeds the predetermined threshold value.

It is known that there is a relationship between the temperature in the interior of the rotary member, such as the tool member, and a sign of rupture or the like. In the first embodiment of the present invention, therefore, it is determined whether the difference between the actual temperature and the predetermined ideal temperature exceeds a predetermined threshold value, and in the case in which the difference between the actual temperature and the predetermined ideal temperature exceeds the predetermined threshold value, the same is detected as a limit temperature related to damage. Hereinafter, a representative example of setting the ideal temperature will be described.

The ideal temperature set by the ideal temperature setting means may be calculated by a predetermined calculation formula based on operation conditions of the rotary member and the temperature measurement device.

In addition, an example of the calculation formula is

[Formula 1]

$$T = T_s + (T_0 - T_s)\exp(-t / T_m)$$

where
$\rho$ is a density, C is a specific heat, $\alpha$ is a coefficient of heat transfer to the outside, To is an initial temperature of a column,
Ts is an external step temperature in a step response assuming rapid change, and
Tm is $\rho CD/4\alpha$.

In this example, it is possible to derive the ideal temperature in advance from a calculation formula that is logically set for material and operation conditions.

In addition, the ideal temperature set by the ideal temperature setting means may be determined based on a time/temperature table indicating a relationship between a time and a temperature.

When a user verifies and sets the ideal temperature based on machining conditions, the ideal temperature may be determined in response thereto, in addition to being calculated from the predetermined calculation formula. The determination as to which step is a sign of rupture or the like may be based on user's settings.

In these two examples, considering that it is difficult to correspond to all the possible shapes of the rotary member, the materials of the rotary member, the operation conditions, and the environmental conditions using a theoretical calculation formula, it is possible to set a suitable temperature/time table that furthermore includes error and the like and to set an ideal temperature derived by the user based on rules of thumb as a unique temperature for the rotary member, the operation conditions, and the environmental conditions.

In addition, the detection means may detect a temperature at which the difference between the actual temperature and the ideal temperature exceeds the threshold value to be a limit temperature, and the ideal temperature may be detected as the limit temperature when the ideal temperature obtained from the calculation formula, the ideal temperature set by the user, or any one of these two ideal temperatures exceeds the threshold value.

In addition, a second embodiment of the present invention is characterized in that a temperature measurement device for measuring the temperature of a rotary member in a machining apparatus that holds the rotary member, which is rotatable about an axis of rotation and rotates coaxially with the rotary member in cooperation with the rotary member, includes
a temperature measurement means for measuring an actual temperature of the rotary member during the rotation of the rotary member,
a temperature change detection means for detecting variability of the actual temperature measured by the temperature measurement means, and
a border detection means for detecting whether or not the variability of the actual temperature detected by the temperature change detection means exceeds a predetermined condition as a limit temperature.

In addition, the temperature measurement device may further include
an ideal temperature setting means for setting an ideal temperature of the rotary member at a predetermined time during rotation of the rotary member, and
a detection means for detecting whether or not the difference between the actual temperature measured by the temperature measurement means and the ideal temperature set by the ideal temperature setting means at that time exceeds a predetermined threshold value.

In the second embodiment of the present invention, the limit of the variability of the actual temperature is set without setting the limit of the magnitude of temperature increase. In the first embodiment of the present invention, the limit temperature, which becomes a sign of rupture or the like, is detected from the magnitude of temperature increase. However, it is known that it may not be possible to detect an appropriate sign of rupture or the like using only this. Of course, even in the first embodiment of the present invention, it is possible for the user to set the ideal temperature such that the degree of freedom can be enhanced. In the case in which an increase in temperature is small until just before rupture or the like and in which the temperature increases suddenly just before rupture or the like, however, it may be difficult to capture a sign using only the magnitude of change of temperature.

In the second embodiment of the present invention, it the case in which the variability of the actual temperature (for example, the rate of change (the slope of a temperature curve) increases before the rate of temperature increase itself increases is recognized as the verification result in consideration thereof, the same is detected as a limit sign of rupture or the like. Meanwhile, since correspondence to all cases may not be possible using merely the variability of the actual temperature, it is also possible to set the ideal temperature and to combine the first embodiment of the present invention having the variability of the actual temperature as the threshold value with the second embodiment of the present invention.

In addition, the measurement of the actual temperature by the temperature measurement means of the second embodiment of the present invention may be performed for a predetermined time at a predetermined time interval, and
the measurement of the actual temperature by the temperature measurement means may be performed for each operation time at each operation of the rotary member.

The actual temperature measured for each machining time or the actual temperature measured during each machining operation (for example, at each boring operation or at each side-machining pass using an end mill) may be considered as the actual temperature.

In addition, the maximum temperature of the actual temperature, measured by the temperature measurement means, for each measurement time may be set as an actual temperature value.

In addition, the temperature change detection means may calculate a rate of change between the measured actual temperature and an actual temperature measured by that time as the variability, and
the limit temperature detection means may detect whether or not the calculated variability exceeds a predetermined threshold value.

The limit of the variability of the actual temperature set as the threshold value may be considered as the detected variability of the actual temperature.

In addition, the temperature change detection means may calculate the difference in temperature between the measured actual temperature and the actual temperature measured by that time as the variability, and
the limit temperature detection means may detect whether or not the calculated variability exceeds the predetermined threshold value.

As the detected variability of the actual temperature, it is also considered that the limit of the difference in temperature between the current actual temperature and the actual temperature measured by that time, such as the difference from one time before (or several times before) or the difference from an average of several times, is set as the threshold value, in addition to the case having the variability of the actual temperature described above.

Furthermore, the temperature change detection means may calculate an integrated value of the actual temperature for each predetermined amount of time or for each operation time as the variability of temperature, and
the limit temperature detection means may detect whether or not the calculated variability exceeds the predetermined threshold value.

It is also considered that the variability of temperature is set using the limit of the integrated value of the actual temperature as the threshold value. In actual measurement data, there is not only the case in which the temperature increases constantly but also the case in which the overall temperature increases over time while the temperature increases and decreases repeatedly. Consequently, this method is particularly suitable for such a case.

Also, in the first and second embodiments of the present invention, a warning signal may be generated when the limit temperature is detected.

Furthermore, control may be performed so as to decelerate or stop the rotation of the rotary member when the limit temperature is detected.

In the case in which control is performed so as to decelerate or stop the rotary member when the limit temperature is detected and is determined as a sign of rupture or the like, it is possible to actually prevent the rupture of the tool before the same occurs, whereby it is possible to reduce the loss of replacement time due to the rupture or the like of the tool.

In addition, the temperature measurement means may include a temperature measurement element disposed at the rotary member for measuring the temperature of the rotary member and a transmission means for transmitting a temperature measurement result generated using the temperature measurement means from the temperature measurement element.

In addition, the rotary member may be, for example, an end mill, a tap, a drill, or a rotary tool for friction stir joining, by which a fixed object to be machined may be machined.

In addition, another first embodiment of the present invention provides a temperature measurement device for measuring the temperature of a jig that machines a rotary member while being in contact with the rotary member in a rotary apparatus that holds the rotary member, which is rotatable about an axis of rotation and rotates coaxially with the rotary member in cooperation with the rotary member, the temperature measurement device including:

an ideal temperature setting means for setting an ideal temperature of the jig,
a temperature measurement means for measuring an actual temperature of the jig, and
a detection means for detecting whether or not the difference between the actual temperature measured by the temperature measurement means and the ideal temperature set by the ideal temperature setting means at that time exceeds a predetermined threshold value.

In addition, in a second embodiment of the present invention,
a temperature measurement device for measuring the temperature of a jig that machines a rotary member while being in contact with the rotary member in a rotary apparatus that holds the rotary member, which is rotatable about an axis of rotation and rotates coaxially with the rotary member in cooperation with the rotary member, includes
a temperature measurement means for measuring an actual temperature of the jig,
a temperature change detection means for detecting variability of the actual temperature measured by the temperature measurement means, and
a border detection means for detecting whether or not the variability of the actual temperature detected by the temperature change detection means exceeds a predetermined condition as a limit temperature.

The rotary member may be an object to be machined, and the fixed machining jig may be used to detect a sign of rupture or the like due to the increase in temperature.

The jig may be, for example, a cutting tool or a turning tool.

## EFFECTS OF THE INVENTION

According to the temperature measurement device of the present invention, it is possible to foresee (detect) the limit of frictional wear related to the rupture or the like of a rotary member, such as a metal tool, in real time during the rotation of the rotary member while monitoring an increase in the temperature of the rotary member, thereby preventing damage to the tool or excessive wear of the tool, preventing the loss of replacement time, and preventing secondary damage to a workpiece.

## BRIEF DESCRIPTION OF THE DRAWINGS

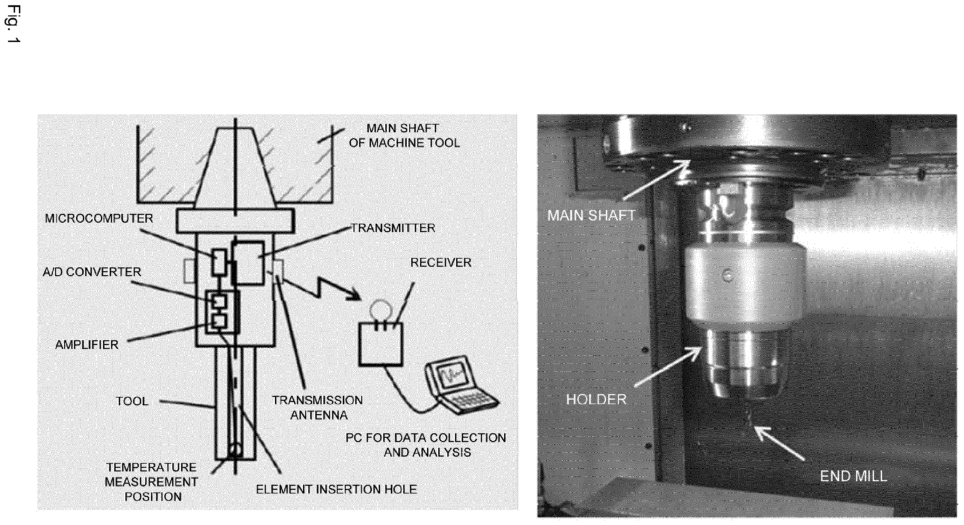

FIG. 1 is a view exemplarily showing a machining apparatus (an end mill apparatus) having a temperature measurement device according to the present invention, wherein the figure on the left is a schematic sectional view of the machining apparatus in the longitudinal direction and the figure on the right is a photograph of the machining apparatus;

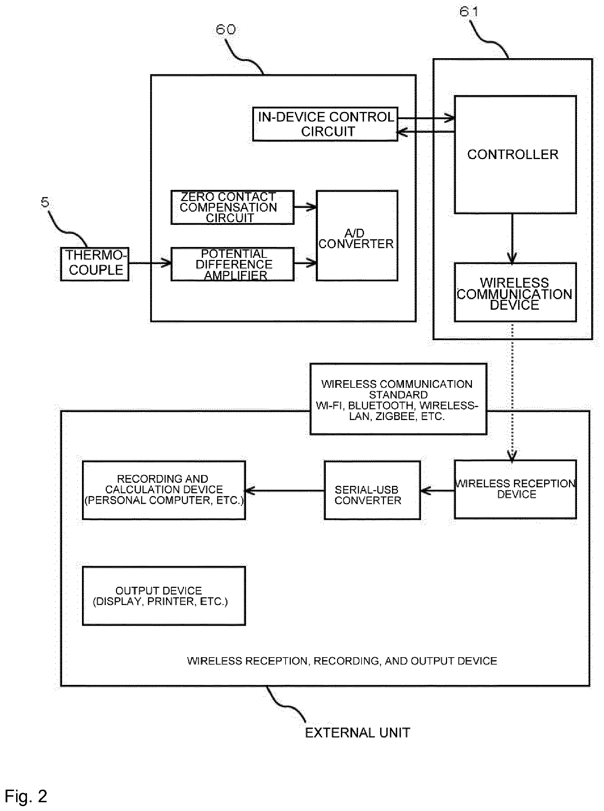

FIG. 2 is a block diagram showing an example of the flow of an electric signal indicating the temperature of a cutting tool measured by a temperature measurement means;

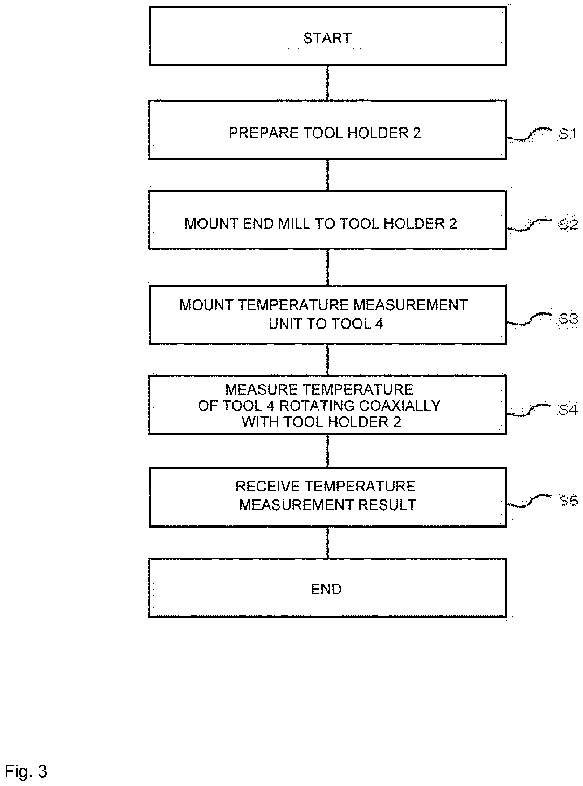

FIG. 3 is a flowchart illustrating an example of a method of measuring the temperature of an end mill in the present embodiment;

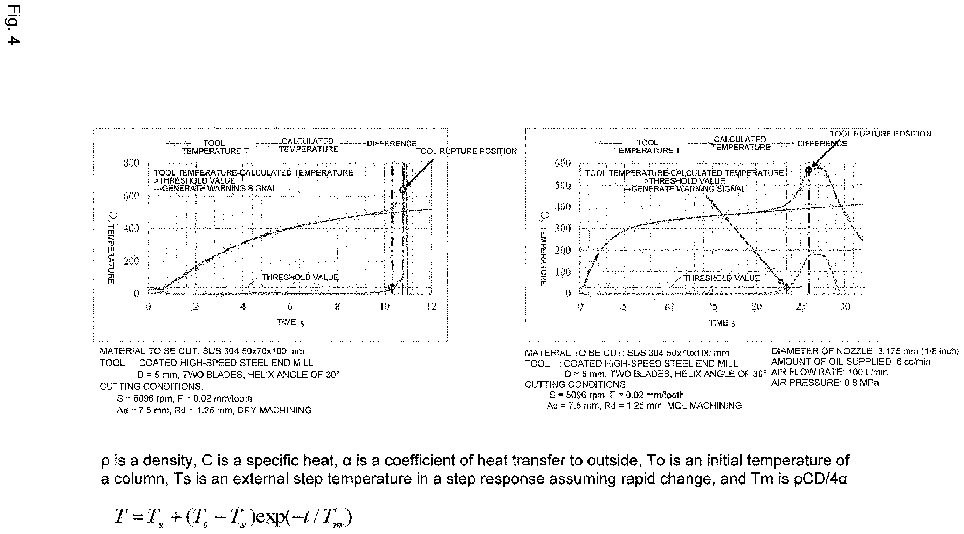

FIG. 4 is a graph showing the relationship between an actually measured temperature and an ideal temperature (a calculated temperature) in the end mill and a machining time when an object to be machined (a material to be cut) is dry-machined and MQL-machined using the end mill, the difference between the actually measured temperature and the ideal temperature, and a threshold value indicating the limit of the difference, wherein the figure on the left is a graph at the time of dry machining and the figure on the right is a graph at the time of MQL machining (MQL: machining performed while oil is supplied to the end mill);

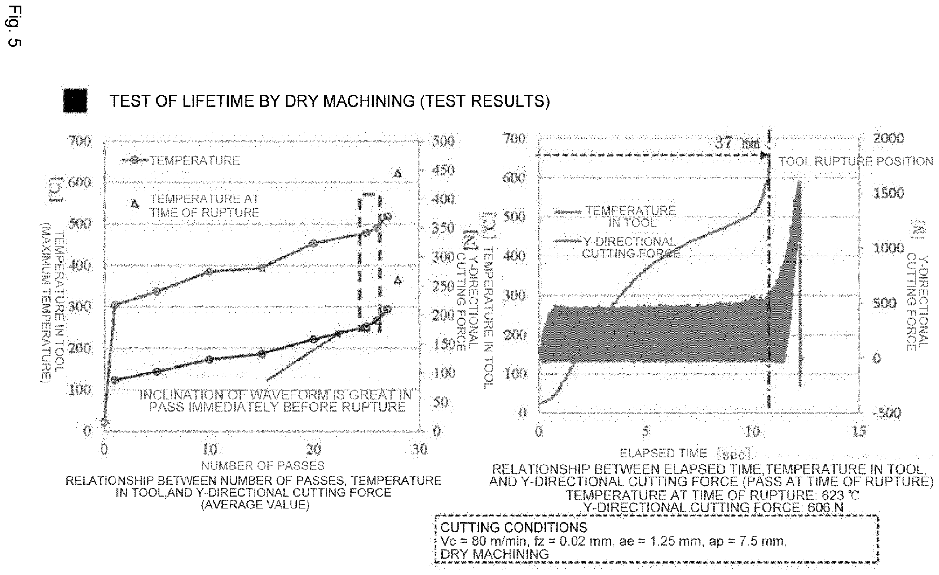

FIG. 5 is a graph illustrating a difference over time between an increase in the temperature of the end mill and an increase in the cutting force of the end mill in the direction of movement (the Y direction) at the time of dry machining;

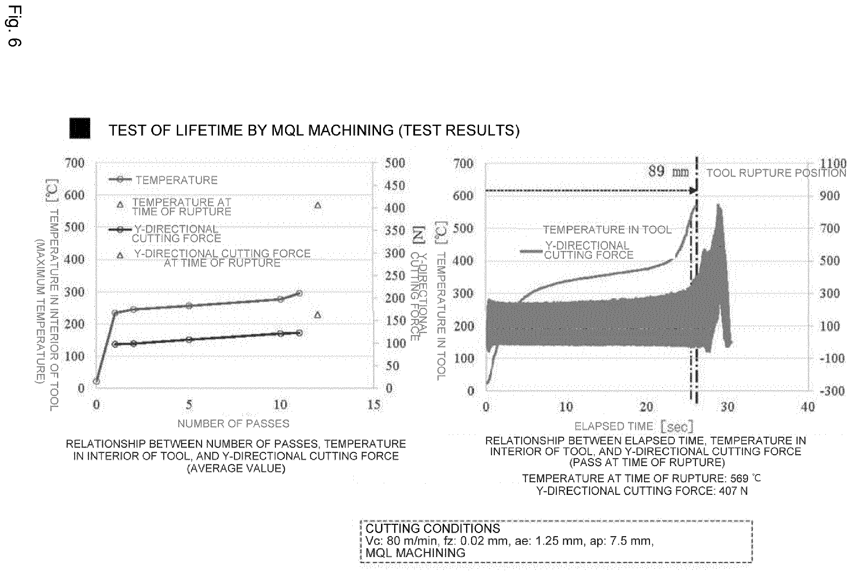

FIG. 6 is a graph illustrating a difference over time between an increase in the temperature of the end mill and an increase in the cutting force of the end mill in the direction of movement (the Y direction) at the time of MQL machining;

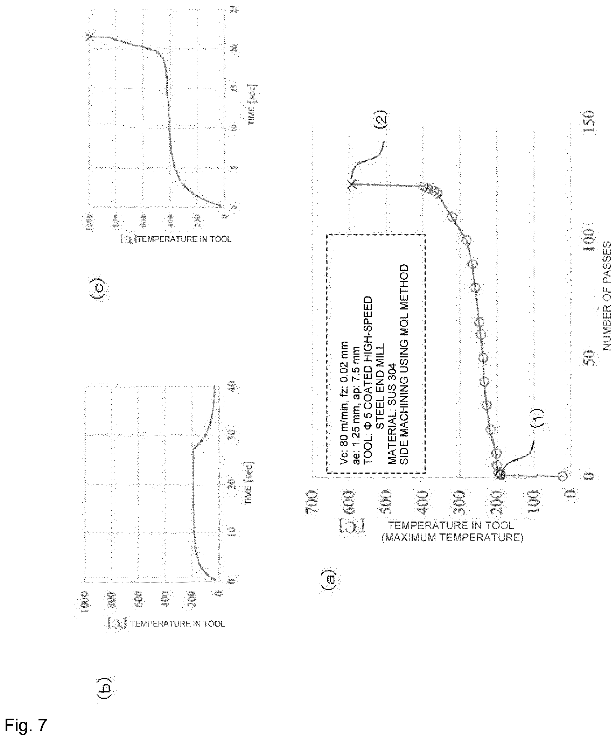

FIG. 7 is a graph showing the relationship between an actually measured temperature in the interior of the end mill and a machining time when the side surface of an object to be machined (a material to be cut) is machined through an MQL method (the MQL method: machining performed while oil is supplied to the end mill) using the end mill, wherein FIG. 7(a) shows the relationship between the number of passes and a temperature in the interior of the tool with one side-surface machining operation (= one pass) as a unit of time, FIG. 7(b) shows the relationship between the time in the first pass (see (1) of FIG. 7(a)) and the temperature in the interior of the tool, and FIG. 7(c) shows the relationship between the time of the 124th pass (see (2) of FIG. 7(a)) and the temperature in the interior of the tool;

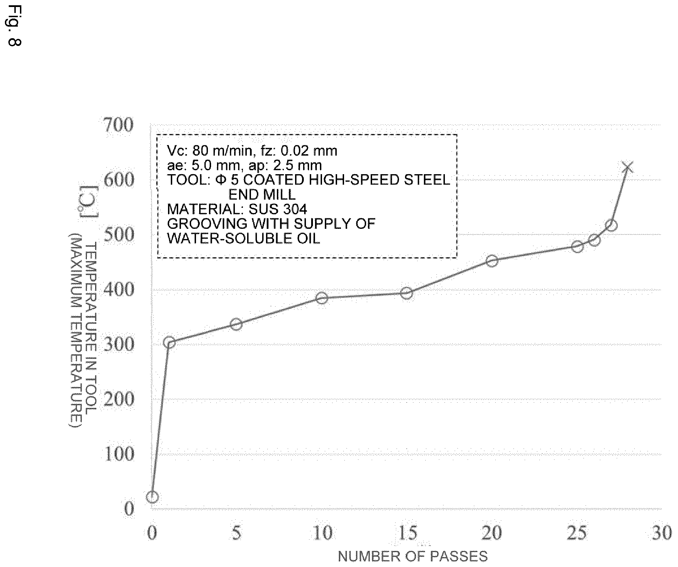

FIG. 8 is a graph showing the relationship between an actually measured temperature in the interior of the end mill and a machining time when the side surface of an object to be machined is dry-machined using the end mill, which shows the relationship between the number of passes and a temperature in the interior of the tool with one side-surface machining operation (= one pass) as a unit of time, wherein the maximum temperature in each pass is shown as the temperature in the interior of the tool;

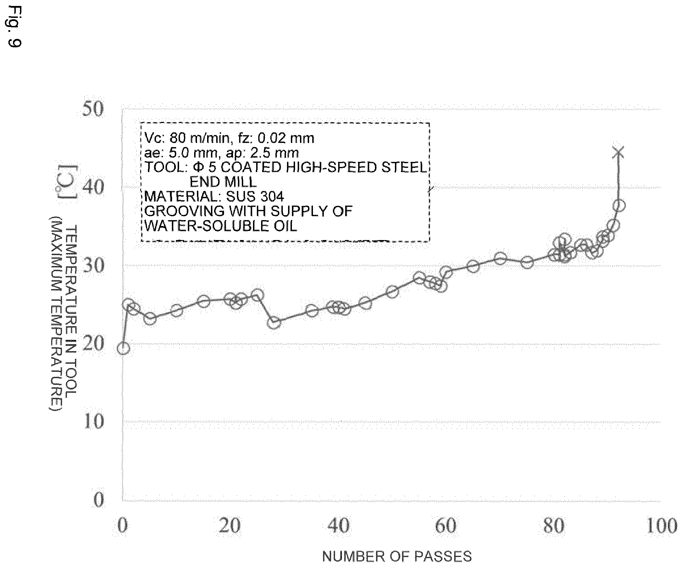

FIG. 9 is a graph showing the relationship between an actually measured temperature in the interior of the end mill and a machining time when an object to be machined is grooved using the end mill while a water-soluble oil is supplied to the end mill, which shows the relationship between the number of passes and a temperature in the interior of the tool with one pass as a unit of time;

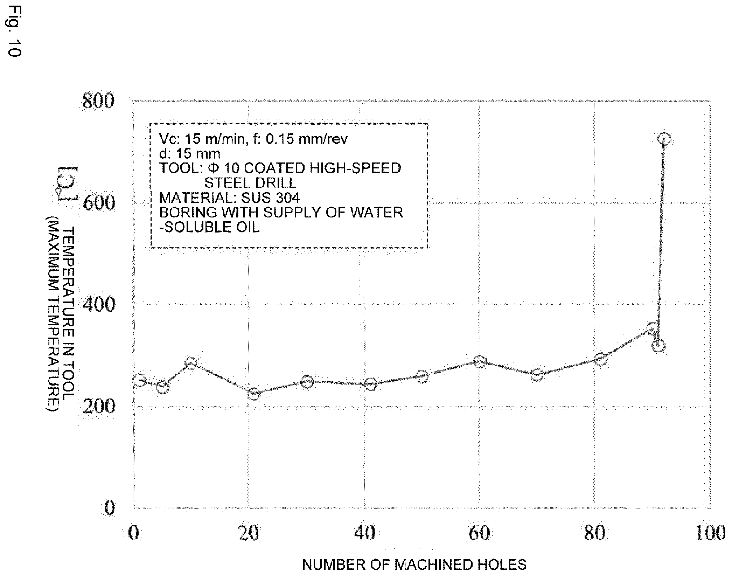

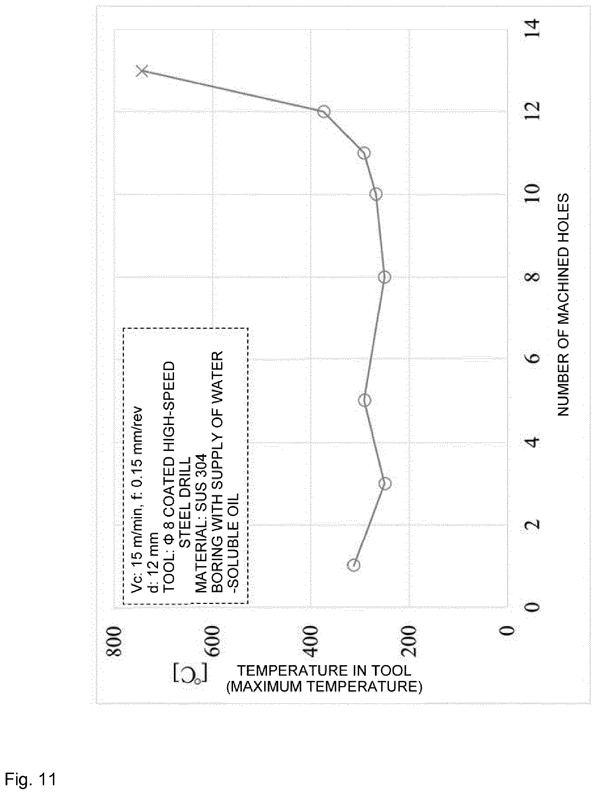

FIG. 10 is a graph showing the relationship between an actually measured temperature in the interior of the end mill and a machining time when an object to be machined (a material to be cut) is bored using the end mill while a water-soluble oil is supplied to the end mill, which shows the relationship between the number of machining operations and a temperature in the interior of the tool with one boring operation (= one machining operation) as a unit of time; and FIG. 11 is a graph showing the relationship between an actually measured temperature in the interior of the end mill and a machining time when an object to be machined (a material to be cut) is bored using the end mill while a water-soluble oil is supplied to the end mill.

## BEST MODE FOR CARRYING OUT THE INVENTION

FIG. 1 is a view exemplarily showing a machining apparatus (an end mill apparatus) having a temperature measurement device according to a first or second embodiment of the present invention, wherein the figure on the left is a schematic sectional view of the machining apparatus in the longitudinal direction and the figure on the right is a photograph of the machining apparatus. In the machining apparatus of FIG. 1, the end mill is used as a tool. In addition to the end mill, however, a drill, a tap, or a rotary tool for friction stir joining may be used as the tool.

In FIG. 1, there is shown a machining apparatus having a temperature measurement device according to a first embodiment of the present invention in the case in which an end mill is used as a rotary member. As shown in the figure on the left, the temperature measurement device according to the first embodiment of the present invention has a main shaft, which serves as a body part that is axially rotated, and a cylindrical tool holder coaxially connected to the lower end of the main shaft for rotating in cooperation with the main shaft. The tool holder coaxially holds the end mill at the lower end thereof, and the end mill rotates in cooperation with the main shaft. In addition, as shown in the figure on the left, the temperature measurement device includes a thermocouple, which serves as a temperature measurement means, an electronic board for processing a signal from the thermocouple, a transmitter (a transmission means) for transmitting the signal processed by the electronic board to the outside, and a power supply unit (not shown). The electronic board is provided with an amplifier for amplifying an analog signal from the thermocouple and an A/D converter for converting the amplified analog signal into a digital signal.

In addition, a hollow space, which extends in the axial direction and is open at the lower end thereof, is provided in the holder, and a communication hole, which communicates with the hollow space from the outer circumference thereof, is formed in the holder. Although not shown, the communication hole is formed so as to extend in a direction that is approximately perpendicular to the axial length direction of the holder. Meanwhile, a collet nut is inserted into the tool holder near the tip of the tool holder to hold the end mill at the tip of the tool holder.

In addition, a hollow hole, which extends in the axial direction, is also provided in the end mill. Here, the hollow hole is formed through the end mill from the upper end to the lower end thereof. In this specification, however, a semi-through hole, which extends from the upper end to a portion between the upper end and the lower end thereof, may also be included as the through hole.

A thermocouple, a thermistor, a platinum resistance thermometer sensor, etc. are used as the temperature measurement element (the temperature measurement means) of the temperature measurement device, which is configured to be mounted in the through hole formed in the end mill. The temperature measurement element is configured to measure the temperature of the end mill, which rotates coaxially with the tool holder, in real time in the state of being mounted in the lower part of the through hole. In addition, the temperature measurement element is configured to transmit a signal to a personal computer for data collection and analysis via the electronic board and an external receiver.

The electronic board (a microcomputer), the A/D converter, the amplifier, and the transmitter are provided in the tool holder or at the outer circumference of the tool holder. A signal from the electronic board transmits the temperature of the end mill to the receiver via the transmitter in real time in a wireless or wired manner. The transmitter is connected to the PC for data collection and analysis, which collects and analyzes data on the temperature of the end mill.

FIG. 2 is a block diagram showing an example of the flow of an electric signal indicating the temperature of a cutting tool measured by a temperature measurement unit. In this example, the flow of an electric signal from a thermocouple is shown. In FIG. 2, arrows indicate the flow of an electric signal indicating the temperature of the end mill measured by the thermocouple. According to the format of a signal transmission line, a wired system is shown by a solid line, and a wireless system is shown by a broken line. In this example, a zero contact compensation circuit, a potential difference amplification unit, an A/D (analog/digital) converter, and an in-device control circuit constitute a temperature reception unit. Additionally, in this example, a controller and a wireless communication device constitute a transmission unit.

In addition, as shown in FIG. 2, in this example, a wireless reception, recording, and output device constitutes an external unit. The wireless reception, recording, and output device includes a wireless reception device, a serial USB (universal serial bus) converter, a recording and calculation device such as a personal computer, and an output device such as a display or a printer, which are arranged from the upstream side to the downstream side in the direction of flow of an electrical signal. In addition, Wi-Fi (wireless fidelity), Bluetooth, wireless LAN (local Area Network), ZigBee, etc. may be used as a wireless communication standard for communication with the wireless reception device, shown by the broken line in FIG. 2.

Next, an example of a method of measuring the temperature of the end mill in the present embodiment will be described with reference to FIG. 3. In an example of the temperature measurement method, a process S1 of preparing the tool holder, a process S2 of mounting the end mill to the tip (the lower end) of the tool holder 2, a process S3 of mounting the temperature measurement element in the hollow hole formed in the end mill, a process S4 of measuring the temperature of the end mill, which rotates coaxially with the tool holder, using the temperature measurement element, and a process S5 of the electronic board (the amplifier, the A/D converter, and the microcomputer) receiving the result of measurement by the temperature measurement element may be sequentially performed.

The temperature measurement unit is disposed in the tool holder, the temperature measurement element, such as the thermocouple, connected thereto is inserted into the vicinity of a cutting edge of the tip of the end mill using a pinhole formed therein in the axial direction, and the temperature measurement element is moved to a position at which it is appropriate to measure an increase in the temperature on the contact surfaces of the end mill and an object to be machined that is generated due to frictional heat therebetween, whereby it is possible to acquire the end-point temperature of the end mill, i.e. the temperature of the tip of the end mill during machining, as a value that is extremely close to the true value of the temperature of the machining site.

Furthermore, the result of temperature measurement performed by the temperature measurement element, disposed in the end mill, during turning of the end mill is transmitted to the personal computer (a terminal for data collection and processing) via the transmitter, which is electrically connected to the temperature measurement element, whereby it is possible to accurately monitor the temperature of the tool in real time. In addition, it is possible to recognize the temperature of the tool as a sign of rupture to the end mill by analyzing variation in temperature over time. Next, a method of analyzing the temperature of the tool that is actually measured and detecting a sign of rupture will be described.

FIG. 4 is a graph showing the relationship between an actually measured temperature and an ideal temperature (a calculated temperature) in the end mill and a machining time when an object to be machined (a material to be cut) is dry-machined and MQL-machined using the end mill, the difference between the actually measured temperature and the ideal temperature, and a threshold value indicating the limit of the difference, wherein the figure on the left is a graph at the time of dry machining and the figure on the right is a graph at the time of MQL machining (MQL: machining performed while oil is supplied to the end mill). Meanwhile, the cutting conditions, the material to be cut, and the end mill are shown under respective graphs. In addition, the ideal temperature is a temperature that is calculated in real time according to a predetermined calculation formula, shown in the lower column of FIG. 4. The threshold value is a predetermined fixed value.

In the dry-machining condition, shown in the figure on the left of FIG. 4, it is revealed that the actually measured temperature starts to become increasingly distant from the ideal temperature from the vicinity of 9.0 S, the actually measured temperature increases abruptly from the vicinity of 10.8 S, and the end mill is ruptured at 11.0 S. It is understood from this figure that, if the difference between the actually measured temperature at a predetermined time t (= less than 1.0 S) before the rupture of the end mill and the ideal temperature is detected, it is possible to detect a sign of rupture. Specifically, in the figure on the left of FIG. 3, if the threshold value of the difference between the actually measured temperature and the ideal temperature is set to a predetermined temperature (20 °C), a sign of rupture appears about 1.0 S before the rupture. In the temperature measurement device according to this embodiment, when the difference between the actually measured temperature and the ideal temperature exceeds the threshold value, a warning signal is generated. Preferably, control is performed to stop the rotation of the machining apparatus.

In the MQL-machining condition, shown in the figure on the right of FIG. 4, the actually measured temperature starts to become increasingly distant from the ideal temperature from the vicinity of 21.0 S, the actually measured temperature increases greatly from the vicinity of 24.1 S, and the end mill is damaged (but is not yet ruptured) at about 26.0 S, and the actually measured temperature decreases greatly after that. It is understood from this figure that, if the difference between the actually measured temperature a predetermined amount of time t (= less than 2.0 S) before the rupture of the end mill and the ideal temperature is detected, it is possible to detect a sign of rupture. Specifically, in the figure on the right of FIG. 3, if the threshold value of the difference between the actually measured temperature and the ideal temperature is set to a predetermined temperature (50 °C), a sign of rupture appears about 2.0 S before the rupture. In the temperature measurement device according to this embodiment, when the difference between the actually measured temperature and the ideal temperature exceeds the threshold value, a warning signal is generated. More preferably, control is performed to stop the rotation of the machining apparatus.

Even if the machining conditions are changed from these, it is understood in a tool made of a metal that, if the threshold value of the difference between the actually measured temperature and the ideal temperature is set and the difference between the actually measured temperature and the ideal temperature is detected using the set threshold value as the limiting condition, it is possible to prevent damage to the end mill and the rupture of the end mill by detecting a sign of damage and rupture due to frictional wear and controlling the operation of the apparatus in advance. It has been verified that this applies equally to the above metal rotary member (tool), in addition to the end mill. In addition, it has been verified that it is possible to detect a sign of rupture and damage in the same manner even on a tool that is not ruptured or damaged but exceeds the durability limit thereof and needs to be replaced.

Next, the difference over time between an increase in the temperature of the end mill and an increase in the cutting force of the end mill in the direction of movement (the Y direction) at the time of dry machining and MQL machining in different conditions will be described with reference to FIGS. 5 and 6.

In a rotary type machining apparatus, it is possible to measure the cutting force of a tool in the direction of movement (the Y direction). The cutting force in the direction of movement (the Y direction) abruptly increases immediately before the rupture of the tool or damage to the tool. If the cutting force is measured, therefore, it is possible to detect a sign of rupture or damage. Since a change in the cutting force occurs abruptly within a short time immediately before rupture or the like, however, the case in which it is possible to detect a sign of rupture and damage but it is not possible to perform control so as to stop the operation of the apparatus in time is also considered. In contrast, there are many cases in which an increase in temperature is detected at an earlier stage than an increase in cutting force. In that sense, there are many cases in which it is possible to control the operation of the apparatus further in advance by using a method of foreseeing rupture or the like due to an increase in temperature, as in the temperature measurement device according to this embodiment. The verification results thereof are shown in FIGS. 5 and 6.

It is revealed that it is possible to detect a sign of rupture or the like about 1 second earlier for the dry machining of FIG. 5 and about 2 seconds earlier for the MQL machining of FIG. 6 when an increase in temperature is detected than when an increase in the cutting force of the tool in the direction of movement (the Y direction) is detected.

Next, a method of analyzing the actually measured temperature of a tool that has been actually measured and detecting a sign of rupture in a temperature measurement device according to a second embodiment of the present invention will be described. A machining apparatus having a temperature measurement device according to a second embodiment of the present invention is the same as the machining apparatus shown in FIGS. 1 to 3, and therefore a description thereof will be omitted.

FIG. 7 is a graph showing the relationship between an actually measured temperature in the interior of the end mill and a machining time when the side surface of an object to be machined (a material to be cut) is machined through an MQL method (the MQL method: machining performed while oil is supplied to the end mill) using the end mill, wherein FIG. 7(a) shows the relationship between the number of passes and a temperature in the interior of the tool with one side-surface machining operation (= one pass) as a unit of time, FIG. 7(b) shows the relationship between the time in the first pass (see (1) of FIG. 7(a)) and the temperature in the interior of the tool, and FIG. 7(c) shows the relationship between the time of the 124th pass (see (2) of FIG. 7(a)) and the temperature in the interior of the tool. Meanwhile, as shown in FIGS. 7(a) to 7(c), the maximum temperature in each pass is shown as the temperature in the interior of the tool.

Meanwhile, in an experimental example of FIG. 7, a $\varphi$ 5 coated high-speed steel end mill made of SUS 304 material was used as the end mill, and cutting conditions were as follows: a cutting speed $Vc = 80$ m/min, a feed rate per blade $fz = 0.02$ mm, a cutting depth in the radial direction $ae = 1.25$ mm, and a cutting depth in the axial direction $ap = 7.5$ mm.

Referring to FIG. 7(b), it is revealed that, since oil is supplied to the end mill, the temperature in the interior of the tool per pass first increases from a temperature approximate to room temperature, reaches the maximum temperature (about 200 °C in FIG. 7(b)), is generally maintained without change, and decreases when machining is finished.

When the passes (round marks in the figure) are repeated, as shown in FIG. 7(a), the temperature increases gently until about the 100th pass is reached, the temperature increases somewhat greatly in 110th to 120th passes, the temperature increases more abruptly when the 120th pass is exceeded, and the tool is ruptured in the 124th pass. As shown in FIG. 7(c), it is revealed that the temperature in the interior of the tool in the last path, i.e. 124th pass, has a maximum temperature of about 400 °C, an increase in the temperature in the interior of the tool is not found at the halfway point in the same manner as in other passes, and the temperature in the interior of the tool increases abruptly from about 18 sec, whereby the tool is damaged suddenly. Even when an increase in temperature is detected within this pass, therefore, the time until rupture is short, thus making it undesirable as a predictor of rupture.

In addition, for the temperature measurement device according to the first embodiment of the present invention described above, when the maximum temperature of the temperature in the interior of the tool per pass increases to a predetermined temperature or higher, as shown in FIG. 7(a), it is determined that the tool is not yet ruptured. In the example, as shown in FIG. 7(a), the temperature increase magnitude is not so large in about the 110th to 120th passes, whereby it is difficult to determine which temperature to set as a threshold value. If the threshold value is set to too low, even a time having no relation with rupture may be determined as a sign of rupture when measurement accuracy and an error at the time of actual cutting are considered. On the other hand, if the threshold value is set to too high, it is not possible to capture a sign of rupture until the 120th pass is exceeded, and it is not possible to foresee rupture even if the threshold value is set in the case in which the temperature increases suddenly and rupture occurs in the last pass or immediately before it.

Meanwhile, in the example of FIG. 7(a), a rate of increase of temperature (the variability of temperature) is obviously greatly changed when the 100th pass is exceeded. It is revealed that the variability of temperature is greater than the magnitude of actual temperature increase. In the temperature measurement device according to the second embodiment of the present invention, an increase in the variability of temperature is captured and detected as a sign of rupture. A detailed method determining the same as a limit temperature when the variability of temperature is captured and found to be higher than a predetermined variability will be described below.

Next, another experimental example will be considered.

FIG. 8 is a graph showing the relationship between an actually measured temperature in the interior of the end mill and a machining time when the side surface of an object to be machined is dry-machined using the end mill, which shows the relationship between the number of passes and a temperature in the interior of the tool with one side-surface machining operation (= one pass) as a unit of time, in the same manner as in FIG. 7(a), wherein the maximum temperature in each pass is shown as the temperature in the interior of the tool.

Meanwhile, in the example of FIG. 8, the cutting conditions are the same as those in the example of FIG. 7 except that the side surface of the object is machined by dry machining.

When the passes (round marks in the figure) are repeated, as shown in FIG. 8, the temperature increases gently until about the 25th pass is reached. The rate of increase of temperature is higher than that of FIG. 7(a), which, however, is considered to result from the reduction in cooling efficiency for dry-machining conditions. The temperature increases abruptly when the 25th pass is exceeded, and the tool is ruptured in the 28th pass.

In the example of FIG. 8, it is revealed that a rate of increase of temperature (the variability of temperature) is obviously greatly changed when the 20th pass is exceeded and that the variability of temperature is greater than the magnitude of actual temperature increase. Even in this example, therefore, an increase in the variability of temperature is captured and detected as a sign of rupture, and, when variability higher than a predetermined variability is detected, it is possible to determine the same as a limit temperature.

FIG. 9 is a graph showing the relationship between an actually measured temperature in the interior of the end mill and a machining time when an object to be machined is grooved using the end mill while a water-soluble oil is supplied to the end mill, which shows the relationship between the number of passes and temperature in the interior of the tool with one pass as a unit of time, in the same manner as in FIGS. 7(a) and 8. Meanwhile, in the example of FIG. 9, the cutting conditions are the same as those in the examples of FIGS. 7 and 8, except that the object is grooved while the water-soluble oil is supplied to the end mill.

When the passes (round marks in the figure) are repeated, as shown in FIG. 9, the temperature increases gently until about the 85th pass is reached. After that, the temperature increases abruptly, and the tool is ruptured in the 90th pass.

The example of FIG. 9 is an example in which the temperature decreases while the temperature increases gently and in which, in particular, it is difficult to estimate a sign of rupture if the threshold value is set based only on the magnitude of actual temperature increase itself. Consequently, a combination with a method of detecting the difference between the actual temperature and the ideal temperature to determine whether the difference between the actual temperature and the ideal temperature is within a predetermined range of threshold value, as in the first embodiment of the present invention, may be considered.

In the example of FIG. 8, it is revealed that a rate of increase of temperature (the variability of temperature) is obviously greatly changed when the 20th pass is exceeded and that the variability of temperature is greater than the magnitude of actual temperature increase. Even in this example, therefore, an increase in the variability of temperature is captured and detected as a sign of rupture, and, when variability higher than a predetermined variability is detected, it is possible to determine the same as a limit temperature.

FIG. 10 is a graph showing the relationship between an actually measured temperature in the interior of the end mill and the number of machining operations (the number of boring operations) when an object to be machined (a material to be cut) is bored using the end mill while a water-soluble oil is supplied to the end mill, which shows the relationship between the number of machining operations and temperature in the interior of the tool with one boring operation (= one machining operation) as a unit of time. Meanwhile, as shown in FIG. 10, the maximum temperature during each machining process is shown as the temperature in the interior of the tool.

Meanwhile, in the experimental example shown in FIG. 10, boring was performed using a drill, a φ 10 coated high-speed steel drill made of SUS 304 material was used as the drill, and cutting conditions were as follows: a cutting speed Vc = 15 m/min, a feed rate per rotation f = 0.15 mm/rev, and a depth d = 1.5 mm.

When the machining operations (round marks in the figure) are repeated, as shown in FIG. 10, the temperature increases gently until the number of machining operations is about 90. When the number of machining operations is 90, the temperature increases suddenly, and then the drill is ruptured.

FIG. 11 is a graph showing the relationship between the actually measured temperature in the interior of the end mill and the number of machining operations (the number of boring operations) when an object to be machined (a material to be cut) is bored using the end mill while a water-soluble oil is supplied to the end mill, in the same manner as in FIG. 10. A φ 8 coated high-speed steel drill made of SUS 304 material is used as the drill, and a cutting speed Vc and a feed rate per rotation f are the same as those in FIG. 10 and a depth d = 12 mm as cutting conditions.

When the machining operations (round marks in the figure) are repeated, as shown in FIG. 11, the temperature increases gently until the number of machining operations is about 11. When the number of machining operations is 12 or 13, the temperature increases suddenly, and then the drill is ruptured.

Next, concrete methods of calculating the variability of temperature will be illustrated. For example,

  (1) a method of calculating the rate of change between a measured actual temperature and an actual temperature measured by that time as the variability of temperature,
  (2) a method of calculating the difference in temperature between a measured actual temperature and an actual temperature measured by that time as the variability of temperature, and
  (3) a method of calculating the integrated value of an actual temperature for each predetermined amount of time or for each operation time as the variability of temperature may be illustrated.

Although the embodiments of the present invention have been described with reference to the accompanying drawings, the detailed construction of the present invention is not limited to the embodiments. The scope of the present invention is limited by the scope of the claims, rather than the description of the embodiments. Furthermore, the scope of the present invention includes all changes within the meaning and scope equivalent to the scope of the claims.

**Claims**

1.  A temperature measurement device for measuring a temperature of a rotary member in a machining apparatus that holds the rotary member, which is rotatable about an axis of rotation and rotates coaxially with the rotary member in cooperation with the rotary member, the temperature measurement device comprising:

      an ideal temperature setting means for setting an ideal temperature of the rotary member during rotation of the rotary member;
      a temperature measurement means for measuring an actual temperature of the rotary member during rotation of the rotary member; and
      a detection means for detecting whether or not a difference between the actual temperature measured by the temperature measurement means and the ideal temperature set by the ideal temperature setting means exceeds a predetermined threshold value.

2.  The temperature measurement device according to claim 1, wherein the ideal temperature set by the ideal temperature setting means is calculated using predetermined calculation formula based on operation conditions of the rotary member and the temperature measurement device.

3.  The temperature measurement device according to claim 1 or 2, wherein the calculation formula is

  [Formula 1]
  $$T = T_s + (T_0 - T_s)\exp(-t/T_m)$$

where
ρ is a density, C is a specific heat, α is a coefficient of heat transfer to an outside, To is an initial temperature of a column,
Ts is an external step temperature in a step response assuming rapid change, and
Tm is $\rho CD/4\alpha$.

4.  The temperature measurement device according to claim 1, wherein the ideal temperature set by the ideal temperature setting means is determined based on a time/temperature table indicating a relationship between a predetermined time and a temperature.

5.  The temperature measurement device according to any one of claims 1 to 4, wherein the detection means detects a temperature when the difference between the actual temperature and the ideal temperature exceeds the threshold value as a limit temperature.

6.  The temperature measurement device according to any one of claims 2 to 4, wherein the ideal temperature is detected as the limit temperature when the ideal temperature exceeds the threshold value.

7.  A temperature measurement device for measuring a temperature of a rotary member in a machining apparatus that holds the rotary member, which is rotatable about an axis of rotation and rotates coaxially with the rotary member in cooperation with the rotary member, the temperature measurement device comprising:

      a temperature measurement means for measuring an actual temperature of the rotary member during rotation of the rotary member;

a temperature change detection means for detecting variability of the actual temperature measured by the temperature measurement means; and

a border detection means for detecting whether or not the variability of the actual temperature detected by the temperature change detection means exceeds a predetermined condition as a limit temperature.

8. The temperature measurement device according to claim 7, wherein the measurement of the actual temperature by the temperature measurement means is performed for a predetermined time at a predetermined time interval.

9. The temperature measurement device according to claim 7, wherein the measurement of the actual temperature by the temperature measurement means is performed for each operation time during each operation of the rotary member.

10. The temperature measurement device according to any one of claims 7 to 9, wherein a maximum temperature of the actual temperature, measured by the temperature measurement means, for each measurement time is set as an actual temperature value.

11. The temperature measurement device according to any one of claims 7 to 10, wherein
the temperature change detection means calculates a rate of change between the measured actual temperature and an actual temperature measured by that time as the variability, and
the limit temperature detection means detects whether or not the calculated variability exceeds a predetermined threshold value.

12. The temperature measurement device according to any one of claims 7 to 10, wherein
the temperature change detection means calculates a difference in temperature between the measured actual temperature and an actual temperature measured by that time as the variability, and
the limit temperature detection means detects whether or not the calculated variability exceeds a predetermined threshold value.

13. The temperature measurement device according to claim 8 or 9, wherein
the temperature change detection means calculates an integrated value of the actual temperature for each predetermined amount of time or for each operation time as the variability of temperature, and
the limit temperature detection means detects whether or not the calculated variability exceeds a predetermined threshold value.

14. The temperature measurement device according to any one of claims 7 to 13, further comprising:

an ideal temperature setting means for setting an ideal temperature of the rotary member at a predetermined time during rotation of the rotary member; and
a detection means for detecting whether or not a difference between the actual temperature measured by the temperature measurement means and the ideal temperature set by the ideal temperature setting means at that time exceeds a predetermined threshold value.

15. The temperature measurement device according to claim 5 or 6, wherein a warning signal is generated when the limit temperature is detected.

16. The temperature measurement device according to any one of claims 5 to 15, wherein control is performed so as to decelerate or stop the rotation of the rotary member when the limit temperature is detected.

17. The temperature measurement device according to any one of claims 1 to 16, wherein the temperature measurement means comprises a temperature measurement element disposed at the rotary member for measuring the temperature of the rotary member and a transmission means for transmitting a temperature measurement result generated using the temperature measurement means from the temperature measurement element.

18. The temperature measurement device according to any one of claims 1 to 17, wherein the rotary member is an end mill, a tap, a drill, or a rotary tool for friction stir joining, by which a fixed object to be machined is machined.

19. A temperature measurement device for measuring a temperature of a jig that machines a rotary member while being in contact with the rotary member in a rotary apparatus that holds the rotary member, which is rotatable about an axis of rotation and rotates coaxially with the rotary member in cooperation with the rotary member, the temperature measurement device comprising:

an ideal temperature setting means for setting an ideal temperature of the jig;
a temperature measurement means for measuring an actual temperature of the jig; and
a detection means for detecting whether or not a difference between the actual temperature measured by the temperature measurement means and the ideal temperature set by the ideal temperature setting means at that time exceeds a predetermined threshold value.

**20.** A temperature measurement device for measuring a temperature of a jig that machines a rotary member while being in contact with the rotary member in a rotary apparatus that holds the rotary member, which is rotatable about an axis of rotation and rotates coaxially with the rotary member in cooperation with the rotary member, the temperature measurement device comprising:

a temperature measurement means for measuring an actual temperature of the jig;
a temperature change detection means for detecting variability of the actual temperature measured by the temperature measurement means; and
a border detection means for detecting whether or not the variability of the actual temperature detected by the temperature change detection means exceeds a predetermined condition as a limit temperature.

**21.** The temperature measurement device according to claim 19 or 20, wherein the jig is a cutting tool or a turning tool.

Fig. 1

EP 3 264 058 A1

Fig. 2

```
              ┌─────────────────────────────────────┐
              │               START                 │
              └─────────────────────────────────────┘
                               │
              ┌─────────────────────────────────────┐
              │       PREPARE TOOL HOLDER 2         │ ──── S1
              └─────────────────────────────────────┘
                               │
              ┌─────────────────────────────────────┐
              │    MOUNT END MILL TO TOOL HOLDER 2  │ ──── S2
              └─────────────────────────────────────┘
                               │
              ┌─────────────────────────────────────┐
              │   MOUNT TEMPERATURE MEASUREMENT     │ ──── S3
              │         UNIT TO TOOL 4              │
              └─────────────────────────────────────┘
                               │
              ┌─────────────────────────────────────┐
              │      MEASURE TEMPERATURE            │
              │  OF TOOL 4 ROTATING COAXIALLY       │ ──── S4
              │      WITH TOOL HOLDER 2             │
              └─────────────────────────────────────┘
                               │
              ┌─────────────────────────────────────┐
              │      RECEIVE TEMPERATURE            │ ──── S5
              │      MEASUREMENT RESULT             │
              └─────────────────────────────────────┘
                               │
              ┌─────────────────────────────────────┐
              │                END                  │
              └─────────────────────────────────────┘
```

Fig. 3

MATERIAL TO BE CUT: SUS 304 50x70x100 mm
TOOL : COATED HIGH-SPEED STEEL END MILL
D = 5 mm, TWO BLADES, HELIX ANGLE OF 30°
CUTTING CONDITIONS:
S = 5096 rpm, F = 0.02 mm/tooth
Ad = 7.5 mm, Rd = 1.25 mm, DRY MACHINING

MATERIAL TO BE CUT: SUS 304 50x70x100 mm
TOOL : COATED HIGH-SPEED STEEL END MILL
D = 5 mm, TWO BLADES, HELIX ANGLE OF 30°
CUTTING CONDITIONS:
S = 5096 rpm, F = 0.02 mm/tooth
Ad = 7.5 mm, Rd = 1.25 mm, MQL MACHINING

DIAMETER OF NOZZLE: 3.175 mm (1/8 inch)
AMOUNT OF OIL SUPPLIED: 6 cc/min
AIR FLOW RATE: 100 L/min
AIR PRESSURE: 0.8 MPa

ρ is a density, C is a specific heat, α is a coefficient of heat transfer to outside, To is an initial temperature of a column, Ts is an external step temperature in a step response assuming rapid change, and Tm is ρCD/4α

$$T = T_s + (T_0 - T_s)\exp(-t/T_m)$$

Fig. 4

Fig. 5

**TEST OF LIFETIME BY DRY MACHINING (TEST RESULTS)**

TEMPERATURE

TEMPERATURE AT TIME OF RUPTURE

INCLINATION OF WAVEFORM IS GREAT IN PASS IMMEDIATELY BEFORE RUPTURE

NUMBER OF PASSES

RELATIONSHIP BETWEEN NUMBER OF PASSES, TEMPERATURE IN TOOL, AND Y-DIRECTIONAL CUTTING FORCE (AVERAGE VALUE)

37 mm    TOOL RUPTURE POSITION

TEMPERATURE IN TOOL

Y-DIRECTIONAL CUTTING FORCE

ELAPSED TIME [sec]

RELATIONSHIP BETWEEN ELAPSED TIME, TEMPERATURE IN TOOL, AND Y-DIRECTIONAL CUTTING FORCE (PASS AT TIME OF RUPTURE)
TEMPERATURE AT TIME OF RUPTURE: 623 ℃
Y-DIRECTIONAL CUTTING FORCE: 606 N

CUTTING CONDITIONS
Vc = 80 m/min, fz = 0.02 mm, ae = 1.25 mm, ap = 7.5 mm,
DRY MACHINING

Fig. 6

Fig. 7

Fig. 8

Fig. 9

Fig. 10

Fig. 11

Vc: 15 m/min, f: 0.15 mm/rev
d: 12 mm
TOOL: Φ 8 COATED HIGH-SPEED
        STEEL DRILL
MATERIAL: SUS 304
BORING WITH SUPPLY OF WATER
-SOLUBLE OIL

TEMPERATURE IN TOOL
(MAXIMUM TEMPERATURE) [°C]

NUMBER OF MACHINED HOLES

## INTERNATIONAL SEARCH REPORT

International application No.

PCT/JP2016/055730

**A. CLASSIFICATION OF SUBJECT MATTER**
*G01K1/14*(2006.01)i, *B23K20/12*(2006.01)i, *B23Q17/09*(2006.01)i

According to International Patent Classification (IPC) or to both national classification and IPC

**B. FIELDS SEARCHED**

Minimum documentation searched (classification system followed by classification symbols)
G01K1/00-19/00, B23K20/12, B23Q17/09

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2012-20359 A (Kowa Thermo Technology & Products Co., Ltd.),<br>02 February 2012 (02.02.2012),<br>entire text; all drawings<br>(Family: none) | 1,2,4-6,<br>15-21<br>3 |
| Y<br>A | JP 59-73264 A (Hioki E.E. Corp.),<br>25 April 1984 (25.04.1984),<br>page 5, lower right column, line 15 to page 6,<br>upper left column, line 1; all drawings<br>(Family: none) | 1,2,4-6,<br>14-19,21<br>3 |
| Y<br>A | JP 11-197996 A (Hitachi, Ltd.),<br>27 July 1999 (27.07.1999),<br>paragraphs [0008], [0012]; all drawings<br>(Family: none) | 2,5,6,15-18<br>3 |

☒ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 April 2016 (25.04.16) | 17 May 2016 (17.05.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/055730

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2006-95656 A  (the Doshisha),<br>13 April 2006 (13.04.2006),<br>claim 5; paragraph [0042]; all drawings<br>(Family: none) | 7-10,12,13<br>11,14,16-18,<br>20,21 |
| Y | JP 2014-140951 A  (Toshiba Machine Co., Ltd.),<br>07 August 2014 (07.08.2014),<br>paragraphs [0045], [0071]<br>& US 2013/0195143 A1<br>paragraphs [0048], [0076]<br>& CN 103223625 A        & KR 10-2013-0088781 A<br>& TW 201345651 A | 11,14,16-18 |

Form PCT/ISA/210 (continuation of second sheet) (January 2015)

**EP 3 264 058 A1**

**REFERENCES CITED IN THE DESCRIPTION**

**Patent documents cited in the description**

- JP 2012092205 A